# EUROPÄISCHE PATENTSCHRIFT

(11) **EP 1 716 351 B1**
(45) Veröffentlichungstag und Bekanntmachung des Hinweises auf die Patenterteilung: **18.06.2008**
(21) Anmeldenummer: 05716723.1
(22) Anmeldetag: 17.02.2005
(51) Int. Cl.: F16D 65/14

(54) **HYDRAULISCHE FAHRZEUGBREMSE MIT FESTSTELLBREMSVORRICHTUNG UND VERFAHREN ZU DEREN BETRIEB**
HYDRAULIC BRAKE EQUIPPED WITH A LOCKING DEVICE FOR A VEHICLE AND RELATED OPERATING METHOD
FREIN HYDRAULIQUE DOTE D'UN DISPOSITIF DE BLOCAGE POUR UN VEHICULE ET PROCEDE DE FONCTIONNEMENT ASSOCIE

(30) Priorität: 17.02.2004 DE 102004007846; 11.02.2005 DE 102005006536
(43) Veröffentlichungstag der Anmeldung: 02.11.2006
(73) Patentinhaber: Continental Teves AG & Co. oHG, 60488 Frankfurt am Main (DE)
(72) Erfinder: KNOP, Volker, 56766 Ulmen (DE)
(86) Internationale Anmeldenummer: PCT/EP2005/050703
(87) Internationale Veröffentlichungsnummer: WO 2005/078307

(56) Entgegenhaltungen:
- DE-A- 10 320 800
- DE-A1- 1 630 873
- DE-A1- 1 915 461
- US-A- 3 768 608
- US-A- 3 983 975

## Beschreibung

Die Erfindung betrifft ein Verfahren zum Betrieb einer hydraulischen Fahrzeugbremse mit Feststellbremsvorrichtung, insbesondere für Kraftfahrzeuge, mit einem Bremsgehäuse, in dem mindestens zwei hydraulische Druckräume ausgebildet sind, wobei ein hydraulischer Druckraum durch einen Betriebsdruckraum gebildet wird, der von einem Bremskolben begrenzt ist, und der andere hydraulische Druckraum durch einen absperrbaren Speicherdruckraum gebildet wird.

Eine derartige hydraulische Fahrzeugbremse ist beispielsweise aus der WO 2004/027282 A1 bekannt und dort insbesondere anhand der Fig. 3a und 3b beschrieben. Die DE 103 20 800 A1 offenbart ebenfalls eine derartige hydraulische Fahrzeugbremse. Um im hydraulischen Druckmittel gelöste Gas- oder Luftblasen herauszufördern ist bei der vorbekannten hydraulischen Fahrzeugbremse eine Entlüftung der beiden Druckräume vorzunehmen. Dazu ist für jeden Druckraum jeweils ein separater Entlüfter anzubringen, was jedoch unter Berücksichtigung des zur Verfügung stehenden Bauraums als weniger vorteilhaft anzusehen ist.

Aus der DE 16 30 873 A1 ist ein Bremssattel für eine Zweikreis-Bremsanlage bekannt, wobei die Entlüftung beider Bremskreise über ein gemeinsames Entlüfterventil erfolgt.

Aus der DE 19 15 461 A1 ist ein Innenbackenbremsen-Radzylinder mit zwei Zylinderräumen bekannt, deren Entlüftung mittels eines Doppelentlüfters erfolgt.

Zur Durchführung eines Feststellbremsvorganges ist bei dem aus der WO 2004/027282 A1 vorbekannten System vorgesehen, dass der Druckaufbau im Betriebs- und Speicherdruckraum vorzugsweise mit fremdansteuerbaren Druckerzeugungsaggregaten realisiert wird. Ein möglicher Ausfall der elektrisch versorgten Komponenten bei der vorbekannten hydraulischen Fahrzeugbremse würde ein Lösen der Feststellbremsvorrichtung unmöglich machen.

Es ist daher Aufgabe der Erfindung, ein Verfahren darzustellen, durch welches ein Notlösevorgang der Feststellbremsvorrichtung einer hydraulischen Fahrzeugbremse während eines Defekts der elektronischen Einheit oder der gesamten elektrischen Versorgung realisierbar ist.

Diese Aufgabe der Erfindung wird verfahrensmäßig dadurch gelöst, dass eine Notentriegelung der Feststellbremsvorrichtung mit wenigstens den folgenden Schritten erfolgt:
I. Manuelle Betätigung eines Notentriegelungselements derart, dass der Betriebsdruckraum mit dem Speicherdruckraum hydraulisch verbunden ist;
II. Druckaufbau im Betriebsdruckraum und im Speicherdruckraum ausschließlich durch die Betätigung des Bremspedals durch den Fahrzeugführer;
III. Lösen der Verriegelung des Bremskolbens.

Eine besonders vorteilhafte Weiterbildung des erfindungsgemäßen Verfahrens sieht vor, dass das Lösen der Verriegelung durch die Wiederherstellung der Wirkung eines Zentrallagers für eine mit dem Bremskolben zusammenwirkende Gewindespindel realisiert wird.

Bei einer weiteren vorteilhaften Weiterbildung des erfindungsgemäßen Verfahrens wird das Notentriegelungselement durch eine Entlüfterhülse gebildet, die mit einem ersten Dichtsitz so zusammenwirkt, dass bei der manuellen Betätigung des Notentriegelungselements der Betriebsdruckraum mit dem Speicherdruckraum mittels einer hydraulische Verbindung hydraulisch verbunden wird.

Die Erfindung wird nachfolgend anhand eines Ausführungsbeispiels im Zusammenhang mit der beiliegenden Zeichnung näher erläutert. In der Zeichnung zeigen:
- Fig. 1: eine axiale Schnittdarstellung einer hydraulischen Fahrzeugbremse, an der die vorliegende Erfindung angewendet werden kann,
- Fig. 2: eine Ausführung der hydraulischen Fahrzeugbremse in Teildarstellung.

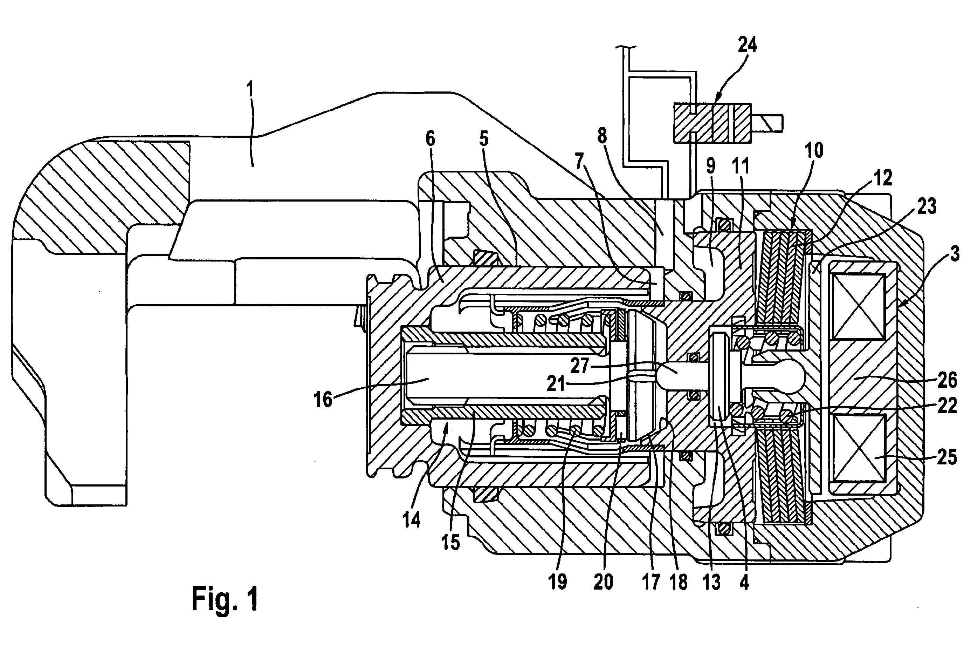

Die in Fig. 1 dargestellte Ausführung der hydraulischen Fahrzeugbremse weist ein Bremsgehäuse 1 auf, welches den äußeren Rand einer nicht dargestellten Bremsscheibe und zwei ebenfalls nicht dargestellte Bremsbeläge umgreift. Das Bremsgehäuse 1 bildet auf seiner Innenseite einen Bremszylinder 5, der einen Bremskolben 6 axial verschiebbar aufnimmt. In den zwischen Bremszylinder 5 und Bremskolben 6 gebildeten Betriebsdruckraum 7 kann mittels eines hydraulischen Anschlusses 8 Bremsflüssigkeit zugeführt werden, so dass sich ein Bremsdruck aufbaut, der den Bremskolben 6 axial zur Bremsscheibe hin verschiebt. Dadurch wird der dem Bremskolben 6 zugewandte Bremsbelag gegen die Bremsscheibe gedrückt, wobei als Reaktion das Bremsgehäuse 1 sich in der entgegengesetzten Richtung verschiebt und dadurch auch den anderen Bremsbelag gegen die Bremsscheibe drückt.

Wie Fig. 1 außerdem zu entnehmen ist, ist ein Arbeitsspeicher 10 an der dem Bremskolben 6 abgewandten Seite des Bremsgehäuses 1 angeordnet. Der Arbeitsspeicher 10 besteht im wesentlichen aus einem hydraulischen Speicherdruckraum 9, einem den Speicherdruckraum 9 begrenzenden Speicherkolben 11 sowie einem Federelement 12, das im gezeigten Beispiel als ein Paket von Tellerfedern ausgeführt ist und sich am Speicherkolben 11 abstützt. Die im Arbeitsspeicher 10 gespeicherte Energie wirkt während eines Feststellbremsvorganges auf den Bremskolben 6, wie nachfolgend noch näher erläutert wird. Dadurch wird erreicht, dass die auf die Bremsbeläge einwirkende Zuspannkraft von thermisch bedingten Längenänderungen im Bereich des Bremsgehäuses 1 nahezu unabhängig ist.

Eine Verriegelungsvorrichtung, die zur Realisierung einer Feststellbremsfunktion erforderlich ist, ist bei der in Fig. 1 dargestellten Ausführung durch ein Spindelgetriebe bzw. eine Gewindemutter-Spindel-Anordnung 14 gebildet. Die erwähnte Gewindemutter-Spindel-Anordnung 14 besteht aus einer Gewindemutter 15 sowie einer Spindel 16, die mittels eines nicht selbsthemmenden Gewindes miteinander in Verbindung stehen. Dabei ist die Gewindemutter 15 mit dem Bremskolben 6 starr verbunden, während die Spindel 16 an ihrem dem Bremskolben 6 abgewandten Ende eine vorzugsweise konische erste Reibfläche 17 aufweist, die mit einer im Speicherkolben 11 verdrehgesichert angeordneten zweiten Reibfläche 18 in- und außer Eingriff bringbar ist. Zu diesem Zweck ist ein Kraftübertragungselement 27 vorgesehen, das von einer zylindrischen Stufenbohrung 13 im Speicherkolben 11 aufgenommen wird und durch ihn hindurchragt und ein Zentrallager 21 für die Spindel 16 bildet. Nach einer Relativbewegung des Kraftübertragungselementes 27 gegenüber dem Speicherkolben 11 wird die Funktion des Zentrallagers 21 aufgehoben und die beiden Reibflächen 17, 18 stehen miteinander in Eingriff, wie nachfolgend noch näher erläutert wird. Außerdem spannt eine sich am Bremsgehäuse 1 abstützende Feder 19 unter Zwischenschaltung eines Axiallagers 20 die Spindel 16 in Richtung auf die zweite Reibfläche 18 bzw. auf das Zentrallager 21 vor.

Die erste Ausführung der erfindungsgemäßen hydraulischen Fahrzeugbremse ist in Fig. 1 in gelöstem Zustand der Feststellbremse dargestellt. Zur Verriegelung der Feststellbremse wird durch einen nicht näher bestimmten Druckerzeuger zunächst sowohl im Betriebsdruckraum 7 als auch im Speicherdruckraum 9 ein hydraulischer Druck aufgebaut. Dazu muss ein elektrisch schaltbares Ventil, das vorzugsweise als ein stromlos geschlossenes (SG-) Ventil 24 ausgebildet ist, in seine offene Schaltstellung gebracht werden. Als Reaktion auf den Druckaufbau im Betriebsdruckraum 7 verschiebt sich der Bremskolben 6 in der Zeichnung nach links, während der Speicherkolben 11 in der Zeichnung nach rechts entgegen der Kraftwirkung des vorgespannten Federelements 12 verschoben wird. Bei diesem Vorgang wird das Federelement 12 komprimiert. Der Speicherkolben 11 nimmt dabei das Kraftübertragungselement 27 mit, indem sich ein am Kraftübertragungselement 27 ausgebildeter Kragen 4 am Übergang zwischen kleinerem und größerem Durchmesser der Stufenbohrung 13 abstützt. Der Speicherkolben 11 und damit das Kraftübertragungselement 27 werden durch den eben erwähnten Druckaufbau im Speicherdruckraum 9 in Fig. 1 nach rechts verschoben bis eine mit dem Kraftübertragungselement 27 in kraftübertragender Verbindung stehende Ankerplatte 23 an einem elektromagnetischen Aktuator 3 zur Anlage kommt. Bei diesem Vorgang liegt die Spindel 16 aufgrund der Kraftwirkung der Feder 19 weiterhin am Zentrallager 21 an, wodurch die beiden Reibflächen 17, 18 nicht in Eingriff treten können.

Anschließend wird der elektromagnetische Aktuator 3 bestromt, wodurch die Ankerplatte 23 in ihrer eben beschriebenen Anschlagposition vom elektromagnetischer Aktuator 3 arretiert wird. Bei einem anschließenden Druckabbau im Betriebsdruckraum 7 und im Speicherdruckraum 9 bewegt sich der Bremskolben 6 in der Zeichnung nach rechts während sich der Speicherkolben 11 nach links bewegt. Durch die Arretierung des Kraftübertragungselementes 27 wird eine Relativbewegung zwischen dem Kraftübertragungselement 27 und dem Speicherkolben 11 ermöglicht, wodurch die Funktion des Zentrallagers 21 für die Spindel 16 aufgehoben wird und die beiden Reibflächen 17, 18 miteinander in Eingriff gebracht werden. Das bereits erwähnte, vorgespannte Federelement 12 drückt den Speicherkolben 11, die aufgrund der in Eingriff gebrachten Reibflächen 17, 18 blockierte Spindel 16, die Gewindemutter 15 und damit den Bremskolben 6 in der Zeichnung nach links bzw. gegen die nicht dargestellte Bremsscheibe. Dadurch ist die Fahrzeugbremse in ihrem zugespannten Zustand verriegelt. Anschließend wird der elektromagnetische Aktuator 3 nicht mehr bestromt und die Ankerplatte 23 bzw. das Kraftübertragungselement 27 sind nicht mehr arretiert. Das Ventil 24 ist stromlos geschaltet und damit geschlossen. Die hydraulische Fahrzeugbremse benötigt also keine elektrische Energie und keinen hydraulischen Druck um die Verriegelung im zugespannten Zustand aufrecht zu erhalten, was als vorteilhaft anzusehen ist.

Zum Lösen der Verriegelung wird wiederum ein hydraulischer Druck im Betriebsdruckraum 7 sowie nach einer entsprechenden Ansteuerung des SG-Ventils 24 auch im Speicherdruckraum 9 ein hydraulischer Druck aufgebaut. Der hydraulische Druck würde wiederum den Bremskolben 6 in Fig. 1 nach links und den Speicherkolben 11 nach rechts verschieben. Allerdings ist es zur Entriegelung der Feststellbremse ausreichend, wenn der Speicherkolben 11 entlastet wird. Ein weiteres Federelement 22, welches das Kraftübertragungselement 27 zur Anlage am Übergang zwischen kleinerem und größerem Durchmesser der Stufenbohrung 13 bringt, drückt das Kraftübertragungselement 27 in Richtung der Spindel 16 und stößt die in Eingriff stehenden Reibflächen 17, 18 bei entsprechender Entlastung des Speicherkolbens 11 auf. Das Kraftübertragungselement 27 bildet anschließend wieder ein Zentrallager 21 für die Spindel 16.

Wie Fig. 1 zu entnehmen ist, sorgt das eben erwähnte weitere Federelement 22 darüber hinaus dafür, dass bei einer Betriebsbremsung, bei der nur der Betriebsdruckraum 7 mit Druck beaufschlagt wird, das Kraftübertragungselement 27 nicht verschoben wird, da es durch das weitere Federelement 22 entgegen der Kraftwirkung des hydraulischen Drucks im Betriebsdruckraum 7 vorgespannt ist. Der Speicherkolben 11 wird bei einer Betriebsbremsung ebenfalls nicht verschoben, da der dem Betriebsdruckraum 7 zugewandte Wirkdurchmesser des Speicherkolbens 11 kleiner ist als der Wirkdurchmesser des Bremskolbens 6. Außerdem wirkt das mit einer konstruktiv festgelegten Vorspannkraft ausgebildete Federelement 12 entgegen der Druckbeaufschlagung im Betriebsdruckraum 7, was eine Verschiebung des Speicherkolbens 11 während einer Betriebsbremsung ebenfalls verhindert.

Die Spule 25 des elektromagnetischen Aktuators 3 erfüllt die Funktion eines Sensors zur Erfassung der Position der Ankerplatte 23, bei der erkennbar ist, ob die Verriegelung der Fahrzeugbremse möglich ist oder nicht. Außerdem ist insbesondere das Anschlagen der Ankerplatte 23 am elektromagnetischen Aktuator 3 ein Signal für den nicht näher bestimmten Druckerzeuger, den Druckaufbau zur Durchführung eines Feststellbremsvorganges in den Druckräumen 7, 9 zu beenden. Um die Ankerplattenposition zuverlässig zu ermitteln, wird die durch die Ankerplattenbewegungen verursachte Induktivitätsänderung der Spule 25 des elektromagnetischen Aktuators 3 bestimmt. Dies geschieht, indem an die Spule 25 Spannungsimpulse angelegt werden. Gleichzeitig wird der Verlauf des durch die Spule 25 fließenden Stroms ermittelt. Dieser Stromverlauf lässt auf die Position der Ankerplatte 23 und damit auf die Position des Kraftübertragungselements 27 schließen. Verändert sich die Position der Ankerplatte 23, so ändert sich auch der Verlauf des durch die Spule 25 fließenden Stroms. Die Induktivitätsänderung der Spule 25 ist vor allem von der Größe des Spaltes zwischen der Ankerplatte 23 und dem Eisenjoch 26 des elektromagnetischen Aktuators 3 abhängig.

Natürlich ist es ebenso denkbar, ein Sensorelement zur Erfassung der Ankerplattenposition bzw. zur Bestimmung der Position des Kraftübertragungselementes 27 zu verwenden. Dieses Sensorelement kann als Hallsensor oder als magnetoresistives Sensorelement ausgeführt werden, die eine berührungslose Sensierung ermöglichen.

Zum Druckaufbau sowohl im Betriebsdruckraum 7 als auch im Speicherdruckraum 9 werden verschiedene, vorzugsweise fremdansteuerbare Druckerzeugungsaggregate verwendet. So kann beispielsweise eine hydraulische Pumpe eingesetzt werden. Denkbar ist auch eine Betätigungseinheit mit einem fremdansteuerbaren Bremskraftverstärker sowie einem dem Bremskraftverstärker nachgeschalteten Hauptbremszylinder. Alternativ kann jedoch auch ein durch den Fahrzeugführer betätigbarer Druckerzeuger Verwendung finden.

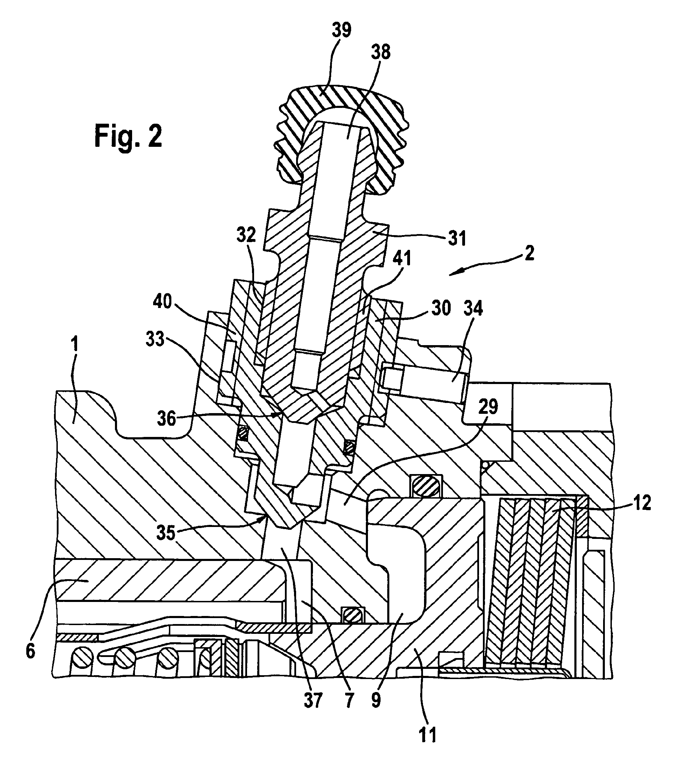

Um die anhand von Fig. 1 beschriebene Fahrzeugbremse und das daran angeschlossene hydraulische Leitungssystem von eingeschlossenen Luft- und Gasblasen zu befreien, ist eine Entlüftung vorzunehmen. Da beide Druckräume 7, 9 entlüftet werden müssen, ist ein Dualentlüfter 2 zur gleichzeitigen Entlüftung der beiden Druckräume 7, 9 vorgesehen. Der Dualentlüfter 2 ist in Fig. 2 dargestellt und wird auf der dem anhand von Fig. 1 beschriebenen hydraulischen Anschlusses 8 gegenüber liegenden Seite des Bremsgehäuses 1 angebracht. Wie in Fig. 2 dargestellt, weist der Dualentlüfter 2 einen zweiteiligen Aufbau auf. In einer Bohrung 33 im Bremsgehäuse 1 ist mit Hilfe eines Gewindes 40 eine Entlüfterhülse 30 eingeschraubt. Die Entlüfterhülse 30 weist wiederum eine axiale Bohrung 32 auf, in die mit Hilfe eines weiteren Gewindes 41 eine Entlüfterschraube 31 eingeschraubt ist.

Nachfolgend wird nun die Funktionsweise des Dualentlüfters 2 näher erläutert: Die in das Bremsgehäuse 1 eingeschraubte Entlüfterhülse 30 wirkt derart mit einem ersten Dichtsitz 35 zusammen, dass der anhand von Fig. 1 bereits beschriebene Betriebsdruckraum 7 mit dem Speicherdruckraum 9 verbindbar ist. Dazu ist eine Bohrung 37 vom Betriebsdruckraum 7 aus in nahezu radialer Richtung vorgesehen, die außerdem den ersten Dichtsitz 35 bildet. Darüber hinaus ist eine hydraulische Verbindung 29 im Bremsgehäuse 1 vorgesehen, die einerseits in den Speicherdruckraum 9 und andererseits in die mit dem Betriebsdruckraum 7 verbundene Bohrung 37 mündet. Dabei ist die hydraulische Verbindung 27 mit der eben beschriebenen Bohrung 37 durch das Zusammenwirken der Entlüfterhülse 30 mit dem ersten Dichtsitz 35 verbindbar und trennbar. Dadurch ist der Betriebsdruckraum 7 mit dem Speicherdruckraum 9 hydraulisch verbindbar und trennbar.

Wie in Fig. 2 dargestellt, mündet die axiale Bohrung 32, die in der Entlüfterhülse 30 ausgebildet ist, in die bereits beschriebene hydraulische Verbindung 29. Diese axiale Bohrung 32 bildet einen zweiten Dichtsitz 36, der mit der in die axiale Bohrung 32 eingeschraubten Entlüfterschraube 31 zusammenwirkt. Die Entlüfterschraube 31 weist eine weitere axiale Bohrung 38 auf, die von einer Staubkappe 39 verschlossen ist. Sofern die Entlüfterschraube 31 nicht am eben beschriebenen zweiten Dichtsitz 36 anliegt, ist die hydraulische Verbindung 29 und damit zumindest der Speicherdruckraum 9 mit der Atmosphäre verbunden. Wenn gleichzeitig der Betriebsdruckraum 7 mit dem Speicherdruckraum 9 wie eben beschrieben hydraulisch verbunden ist, dann ist auch der Betriebsdruckraum 7 mit der Atmosphäre verbunden.

Bei einem Entlüftungsvorgang der hydraulische Fahrzeugbremse wird zunächst die Entlüfterhülse 30 aufgeschraubt bis ein im Bremsgehäuse 1 ausgebildetes Anschlagelement 34 ein weiteres Herausdrehen verhindert. Dadurch sind zunächst der Betriebsdruckraum 7 und der Speicherdruckraum 9 miteinander verbunden. Anschließend wird die Entlüfterschraube 31 aufgeschraubt und die Staubkappe 39 entfernt, was die beiden Druckräume 7, 9, wie bereits beschrieben mit der Atmosphäre verbindet. Anschließend wird das anhand von Fig. 1 erwähnte SG-Ventil 24 bestromt, d.h. geöffnet. Ein nachfolgender Druckaufbau des nicht näher beschriebenen Druckerzeugungsaggregats fördert das hydraulische Druckmittel sowohl durch den Betriebsdruckraum 7 als auch durch den Speicherdruckraum 9 über die hydraulische Verbindung 27 und die weitere in der Entlüfterschraube 31 vorgesehene axiale Bohrung 38 aus der hydraulischen Fahrzeugbremse bzw. aus dem hydraulischen Bremssystem hinaus. Eventuell im Druckmittel vorhandene Luft- oder Gasblasen werden durch diesen Vorgang ausgespült. Anschließend wird die Entlüfterschraube 31 wieder zugeschraubt, wodurch die Druckräume 7, 9 nicht länger mit der Atmosphäre verbunden sind. Im Anschluss darauf wird auch die Entlüfterhülse 30 wieder zugedreht, was die Verbindung der beiden Druckräume 7, 9 trennt.

Erfindungsgemäß dient die Entlüfterhülse 30 außerdem als Notentriegelungselement der Feststellbremsvorrichtung, wie nachfolgend näher erläutert wird. Bei einem Ausfall der elektrischen Energie kann das anhand von Fig. 1 erwähnte SG-Ventil 24 nicht geöffnet werden und der vorhin beschriebene Entriegelungsvorgang der Fahrzeugbremse kann nicht erfolgen. Gleiches gilt, falls sich das SG-Ventil 24 durch einen Defekt nicht in seine offene Schaltstellung bringen lässt. Falls ein elektrisch betriebenes Druckerzeugungsaggregat eingesetzt wird, um einen Verriegelungs- und Entriegelungsvorgang der Fahrzeugbremse durchzuführen, ist bei einem Ausfall der elektrischen Energie oder einem Defekt des Druckerzeugungsaggregats an sich ebenfalls kein Entriegelungsvorgang mehr möglich. Um das Kraftfahrzeug trotz dieser Defekte bewegen zu können, muss ein Notentriegelungsvorgang durchgeführt werden. Dazu wird zunächst die Entlüfterhülse 30 aufgeschraubt bis das Anschlagselement 34 ein weiteres Herausdrehen verhindert. Dadurch ist der Betriebsdruckraum 7, wie bereits beschrieben, mit dem Speicherdruckraum 9 hydraulisch verbunden. Ein Druckaufbau durch den Fahrzeugführer, also durch eine Betätigung des Bremspedals durch den Fahrzeugführer wirkt aufgrund der geöffneten Verbindung zwischen dem Betriebsdruckraum 7 und dem Speicherdruckraum 9 in beiden Druckräumen 7, 9. Dabei wird wie bei dem anhand von Fig. 1 beschriebenen Entriegelungsvorgang der Bremskolben in Fig. 1 nach links verschoben und gleichzeitig der Speicherkolben 11 entlastet. Das in Fig. 1 dargestellte Federelement 22 drückt das Kraftübertragungselement 27 in Richtung der Spindel 16 und stößt die in Eingriff stehenden Reibflächen 17, 18 auf. Das Kraftübertragungselement 27 bildet anschließend wieder ein Zentrallager 21 für die Spindel 16 und das Kraftfahrzeug kann ungebremst bewegt werden. Anschließend sollte noch die Entlüfterschraube 30 wieder zugedreht werden, wodurch die beiden Druckräume 7, 9 wieder getrennt sind.

## Patentansprüche

1. Verfahren zum Betrieb einer hydraulischen Fahrzeugbremse mit Feststellbremsvorrichtung, insbesondere für Kraftfahrzeuge, mit einem Bremsgehäuse (1), in dem mindestens zwei hydraulische Druckräume (7, 9) ausgebildet sind, wobei ein hydraulischer Druckraum durch einen Betriebsdruckraum (7) gebildet wird, der von einem Bremskolben (6) begrenzt ist, und der andere hydraulische Druckraum durch einen absperrbaren Speicherdruckraum (9) gebildet wird, der von einem Speicherkolben (11) begrenzt ist, wobei sich am Speicherkolben (11) ein Federelement (12) zum Speichern von Energie abstützt und wobei die gespeicherte Energie während eines Feststellbremsvorgans auf den Bremskolben (6) wirkt, **dadurch gekennzeichnet, dass** eine Notentriegelung der Feststellbremsvorrichtung mit wenigstens den folgenden Schritten erfolgt:
I. Manuelle Betätigung eines Notentriegelungselements (30) derart, dass der Betriebsdruckraum (7) mit dem Speicherdruckraum (9) hydraulisch verbunden ist;
II. Druckaufbau im Betriebsdruckraum (7) und im Speicherdruckraum (9) ausschließlich durch die Betätigung des Bremspedals durch den Fahrzeugführer;
III. Lösen der Verriegelung des Bremskolbens (6).

2. Verfahren nach Anspruch 1, **dadurch gekennzeichnet, dass** das Lösen der Verriegelung durch die Wiederherstellung der Wirkung eines Zentrallagers (21) für eine mit dem Bremskolben (6) zusammenwirkende Gewindespindel (16), die während eines Feststellbremsvorgangs die Bremskraft von Speicherkolben (11) auf den Bremskolben (6) überträgt, realisiert wird.

3. Verfahren nach Anspruch 1 oder 2, **dadurch gekennzeichnet, dass** das Notentriegelungselement (30) durch eine Entlüfterhülse (30) gebildet wird, die mit einem ersten Dichtsitz (35) so zusammenwirkt, dass bei der manuellen Betätigung des Notentriegelungselements (30) der Betriebsdruckraum (7) mit dem Speicherdruckraum (9) mittels einer hydraulische Verbindung (29) hydraulisch verbunden wird und einen zweiten Dichtsitz (31) aufweist, der mit einem Dichtelement (36) zusammenwirkt, wodurch mindestens einer der beiden Druckräume (7, 9) mit der Atmosphäre verbindbar ist.

## Claims

1. Method for the operation of a hydraulic vehicle brake equipped with a parking brake device, in particular for motor vehicles, including a brake housing (1) in which at least two hydraulic pressure chambers (7, 9) are provided, with one hydraulic pressure chamber being formed of a working pressure chamber (7) that is delimited by a brake piston (6), while the other hydraulic pressure chamber is formed of a closable accumulator pressure chamber (9) that is delimited by an accumulator chamber (11), in which case a spring element (12) is supported on the accumulator piston (11) for the accumulation of energy, and with the accumulated energy acting on the brake piston (6) during a parking brake operation,
**characterized in that** an emergency release operation of the parking brake device is carried out implementing at least the following steps:
I. Manual operation of an emergency unlocking element (30) in such a manner that the working pressure chamber (7) is in hydraulic communication with the accumulator pressure chamber (9);
II. Pressure buildup in the working pressure chamber (7) and in the accumulator pressure chamber (9) exclusively by application of the brake pedal by the driver;
III. Release of the locking engagement of brake piston (6).

2. Method as claimed in claim 1,
**characterized in that** the locking engagement is released by restoring the effect of a central bearing (21) for a threaded spindle (16), which cooperates with the brake piston (6) and transmits the brake force from the accumulator piston (11) onto the brake piston (6) during a parking brake operation.

3. Method as claimed in claim 1 or 2,
**characterized in that** the emergency unlocking element (30) is formed of a bleeder sleeve (30), which cooperates with a first sealing seat (35) in such a manner that, upon manual operation of the emergency unlocking element (30), the working pressure chamber (7) is being connected hydraulically to the accumulator pressure chamber (9) by means of a hydraulic connection (29), and which includes a second sealing seat (31) that cooperates with a second sealing element (36), with the result that at least one of the two pressure chambers (7, 9) can be connected to the atmosphere.

## Revendications

1. Procédé d'exploitation d'un frein hydraulique de véhicule avec dispositif de frein de stationnement, en particulier pour véhicule automobile, avec un boîtier de frein (1) dans lequel sont réalisées au moins deux chambres hydrauliques sous pression (7, 9), une chambre hydraulique sous pression étant formée par une chambre sous pression de service (7) qui est limitée par un frein de piston (6), et l'autre chambre hydraulique sous pression est formée par une chambre sous pression d'accumulateur (9) pouvant être fermée, et qui est limitée par un piston d'accumulateur (11), sur le piston d'accumulateur (11) prenant appui un élément de ressort (12) pour accumuler de l'énergie, et l'énergie accumulée agissant sur le piston de frein (6) pendant un processus de freinage de stationnement, **caractérisée en ce qu'un** déverrouillage d'urgence du dispositif de frein de stationnement s'effectue avec au moins les étapes suivantes :
I. actionnement manuel d'un élément de déverrouillage d'urgence (30) de manière que la chambre sous pression de service (7) soit reliée hydrauliquement à la chambre sous pression d'accumulateur (9) ;
II. constitution d'une pression dans la chambre sous pression de service (7) et dans la chambre sous pression d'accumulateur (9) exclusivement par actionnement de la pédale de frein par le conducteur du véhicule ;
III. suppression du verrouillage du piston de frein (6).

2. Procédé selon la revendication 1, **caractérisé en ce que** la suppression du verrouillage est réalisée par rétablissement de l'action d'un palier central (21) pour une broche filetée (16), coopérant avec le piston de frein (6), qui transmet la force de freinage du piston d'accumulateur (11) au piston de frein (6) pendant un processus de freinage de stationnement.

3. Procédé selon la revendication 1 ou 2, **caractérisé en ce que** l'élément de déverrouillage d'urgence (3) est formé par une douille de purge d'air (30) qui coopère avec un premier siège d'étanchéité (35) de manière que, lors de l'actionnement manuel de l'élément de déverrouillage d'urgence (30), la chambre sous pression de service (7) soit reliée hydrauliquement à la chambre sous pression d'accumulateur par une liaison hydraulique (29), et comporte un second siège d'étanchéité (31) qui coopère avec un élément d'étanchéité (36), ce qui fait qu'au moins l'une des deux chambres sous pression (7, 9) peut être reliée à l'atmosphère.
